# EUROPÄISCHE PATENTSCHRIFT

(11) **EP 1 480 479 B1**
(45) Veröffentlichungstag und Bekanntmachung des Hinweises auf die Patenterteilung: **18.11.2009**
(21) Anmeldenummer: 03101504.3
(22) Anmeldetag: 23.05.2003
(51) Int. Cl.: H04W 64/00, H04L 29/06

(54) **Verfahren, um den Standort von mit einem Mobilgerät ausgerüsteten Personen zu bestimmen**
Method for determining the location of persons equipped with a mobile terminal
Procédé pour la détermination la position de personnes équipées d'un terminal mobile

(43) Veröffentlichungstag der Anmeldung: 24.11.2004
(60) Teilanmeldung: 09166690.9
(73) Patentinhaber: Swisscom AG, 3050 Bern (CH)
(72) Erfinder: Mergen, Wolfgang, 89168 Niederstotzingen (DE); Hurter, Jürg, 3145 Niederscherli (CH)
(74) Vertreter: P&TS Patents & Technology Surveys SA

(56) Entgegenhaltungen:
- EP-A- 1 243 941
- WO-A-01/95642
- WO-A-98/52379
- US-A1- 2002 169 539
- "digital cellular telecommunications systems (phase 2+)(gsm); universal mobile telecommunications system (umts); functional stage 2 description of location services (3gpp ts 23.271 version 4.3.0 release 4)" ETSI TS 123271, Oktober 2001 (2001-10), XP002196637

## Beschreibung

### Technisches Gebiet

Die vorliegende Erfindung betrifft ein Verfahren, um den Standort von Mobilfunkteilnehmern zu bestimmen.

### Stand der Technik

Es ist oft wünschenswert, dass der Standort eines Mobilfunkteilnehmers ermittelt werden kann. Dies ist insbesondere der Fall für behinderte Personen, welche die Hilfe einer Zentrale beantragen wollen. Dies kann beispielsweise dann der Fall sein, wenn der Behinderte eine Notrufmeldung sendet, weil er dringend Hilfe braucht, oder auch wenn der Behinderte von der Zentrale lokalisiert werden muss. Es wäre beispielsweise wünschenswert, dass jeder Behinderte bei Bedarf eine speziell eingerichtete Hilfszentrale anrufen kann und dass die Hilfszentrale sofort den aktuellen Standort des Behinderten ermitteln kann, um ihre Hilfe gezielt organisieren zu können.

Es sind schon Mobilfunkgeräte bekannt, die Standortbestimmungsmittel enthalten. Es sind auch speziell angepasste Mobilgeräte bekannt, die automatisch eine Notrufmeldung mit dem Standort des Mobilteilnehmers senden, wenn der Benutzer eine Taste betätigt und/oder wenn ein Trigger von einem externen Ereignis aktiviert wird. Solche Mobilgeräte erlauben es jedoch nicht, eine Standortabfrage aus der Zentrale zu initiieren. Dies ist oft wünschenswert, beispielsweise für Alzheimer-Kranke oder andere Personen, die die Orientierung verlieren. Auch innerhalb von Krankenhäusern ist es nützlich, wenn Kranke und Behinderte lokalisiert werden können.

Es sind an sich auch so genannte Personen-Trackingsysteme auf Basis eines Mobilfunkgeräts bekannt. Mit solchen Systemen kann eine Zentrale den Standort eines Mobilteilnehmers periodisch oder auf Anfrage ermitteln; zu diesem Zweck verursacht eine von der Zentrale initiierte Lokalisationsmeldung die Erzeugung einer Antwort des Mobilgeräts, in welcher den Standort angegeben ist. Viele bekannte Systeme verwenden jedoch proprietäre Meldungsformate, die den Aufbau einer speziellen, teuren Infrastruktur erfordern. Andere Systeme verwenden Datenkommunikationen über den Sprachkanal, was den Aufbau von gebührenpflichtigen Verbindungen verursacht.

In einem GSM-Mobilfunknetz wäre es auch möglich, den Standort eines Mobilgeräts über ein bekanntes SMS abzufragen; der Empfang einer SMS-Meldung verursacht jedoch meist einen Audioton sowie eine Anzeige auf dem Bildschirm des Mobilgeräts, was schnell störend wird, wenn die Person oft oder periodisch lokalisiert wird.

Bei Mobilgeräten, die über Standortbestimmungsmittel verfügen, kann man grundsätzlich zwischen Geräten unterscheiden, die ihren Standort selbst (beispielsweise mit einem GPS-Empfänger) ermitteln, und Systemen, in welchen der Standort von der Infrastruktur des Mobilfunknetzes, beispielsweise durch Triangulation zwischen mehreren benachbarten Basisstationen, ermittelt wird. GPS-Systeme sind zwar genauer als netzbasierte Systeme, haben aber eine schlechtere Abdeckung, insbesondere innerhalb von Gebäuden oder in der Innenstadt. Es gibt auch Mobilgeräte, mit mehreren unterschiedlichen Standortbestimmungsmitteln. Werden mit solchen kombinierten Mobilgeräten mehrere nacheinander folgenden Standortmessungen durchgeführt, kann sich deren Interpretation (insbesondere durch eine Fernzentrale) als schwierig erweisen, weil die Genauigkeit und die Abweichung der Messungen mit den verschiedenen unterschiedlichen Systemen anders ist. Insbesondere die Ermittlung einer Trajektorie oder Bewegungsrichtung aus Punkten, die mit unterschiedlichen Messungen ermittelt wurden, kann zu ungenauen oder gar völlig falschen Ergebnissen führen.

US20020169539 bertrifft ein Verfahren, um einen Freund oder Bekannten mit seinem Mobiltelefon zu finden. Es wird in diesem Fall eine Lokalisationsmeldung über eine Kurzstrecken-Schnittstelle gesendet.

EP1243941 offenbart die Lokalisation eines Mobilgeräts mit einem GPS. Es können mehrere nacheinander ermittelte Standorte an die abfragende Zentrale gesendet werden; alle Standorte werden jedoch erst nach Empfang der Lokalisationsmeldung ermittelt.

WO9852379 offenbart ein Verfahren, um den Standort eines Mobilteilnehmers zu ermitteln.
ETSI TS 123271 ist eine 3GPP-Norm.

### Zusammenfassung der Erfindung

Es ist daher ein Ziel der Erfindung, ein Verfahren und Vorrichtungen anzubieten, die die oben genannten Nachteile nicht aufweisen.

Es ist ein anderes Ziel der Erfindung, ein Verfahren und ein System anzubieten, mit welchen Mobilfunkteilnehmer von einer Zentrale mittels Lokalisationsmeldungen lokalisiert werden können, wobei die Meldungen standardisierte Übertragungsprotokolle verwenden und wobei der Lokalisierungsvorgang vom Mobilfunkteilnehmer unbemerkt erfolgt.

Es ist ein anderes Ziel der Erfindung, ein Verfahren und ein System anzubieten, mit welchen eine Zentrale nicht nur den Standort des Mobilfunkteilnehmers zu einem bestimmten Zeitpunkt ermitteln kann, sondern auch seine Bewegungsrichtung und seinen extrapolierten Standort zu einem beliebigen Zeitpunkt.

Es ist ein anderes Ziel der Erfindung, ein Verfahren und ein System anzubieten, mit welchem Mobilfunkteilnehmer von einer Zentrale mit Lokalisationsmeldungen lokalisiert werden können, wobei die Zentrale die Messgenauigkeit der verschiedenen Messungen ermitteln kann.

Gemäss der vorliegenden Erfindung wird dieses Ziel insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele mit einem Verfahren erreicht, um den Standort von mit einem Mobilgerät ausgerüsteten Personen durch eine Zentrale zu bestimmen, mit folgenden Schritten:
die Zentrale sendet eine Lokalisationsmeldung über ein Mobilfunknetz an das Mobilgerät der Person, das benannte Mobilgerät empfängt die benannte Lokalisationsmeldung, ohne sie anzuzeigen und ohne ein Tonsignai zu erzeugen, das benannte Mobilgerät prüft den Inhalt der benannten Lokalisatiotismeldung, wobei die benannte Lokalisationsmeldung ein von Dritten unprüfbaren PIN-Code oder eine mit einem elektronischen Schlüssel signierte Datei enthält, falls die benannte Prüfung ein positives Resultat ergibt, beantwortet das benannte Mobilgerät die benannte Lokalisationsmeldung mit einer Antwortmeldung, in welcher die letzten ermittelten Standorte enthalten sind, wobei im benannten Mobilgerät der Standort periodisch ermittelt wird.

Dies hat unter anderem den Vorteil, dass die Zentrale den Standort der Person so oft wie nötig ermitteln kann, ohne dabei die Person mit angezeigten Meldungen oder mit Audiosignalen zu stören und ohne eine Verbindung durch den Sprachkanal aufzubauen.

Vorteilhaft wird das Verfahren mit folgenden Schritten durchgeführt:
periodische Ermittlung des Standorts im benannten Mobilgerät,
Speicherung von mehreren nacheinander folgenden Standorten im benannten Mobilgerät,
Sendung einer Meldung mit mehreren nacheinander folgenden Standorten und/oder mit einer aus mehreren nacheinander folgenden ermittelten Richtungsangaben, an die benannte Zentrale.

Dies hat den Vorteil, dass die Zentrale die Bewegungsrichtung der Person aus den nacheinander folgenden Standortangaben ermitteln kann und dass der Standort der Person zu einem gewissen Zeitpunkt aus mehreren Standortmessungen interpoliert oder extrapoliert werden kann.

Vorteilhaft gibt die die benannte Antwortmeldung an, ob die benannten Standorte durch ein Satellitenstandortbestimmungssystem oder durch die Infrastruktur des Mobilfunknetzes ermittelt wurden.

Dies hat den Vorteil, dass die Zentrale jeweils über das für jede Messung verwendete Standortbestimmungssystem informiert wird und somit die Messgenauigkeit ermitteln kann. Ausserdem können Interpolations- und Extrapolationsprozesse wesentlich genauer und zuverlässiger ermittelt werden, wenn die Messbedingungen bekannt sind.

### Kurze Beschreibung der Figuren

Nachfolgend wird eine Ausführung der vorliegenden Erfindung anhand eines Beispieles beschrieben. Das Beispiel der Ausführung wird durch folgende beigelegte Figuren illustriert, wobei:
- Fig. 1: ein Blockschema des erfindungsgemässen Systems zeigt;
- Fig. 2: ein Blockschema des erfindungsgemässen Mobilgeräts zeigt;
- Fig. 3: ein Flussdiagram einer Ausführungsform des erfindungsgemässen Verfahrens zeigt und
- Fig. 4: schematisch vier Standortmessungen mit zwei unterschiedlichen Standortbestimmungssystemen entlang der Trajektorie eines Mobilteilnehmers zeigt.

### Wege zur Ausführung der Erfindung

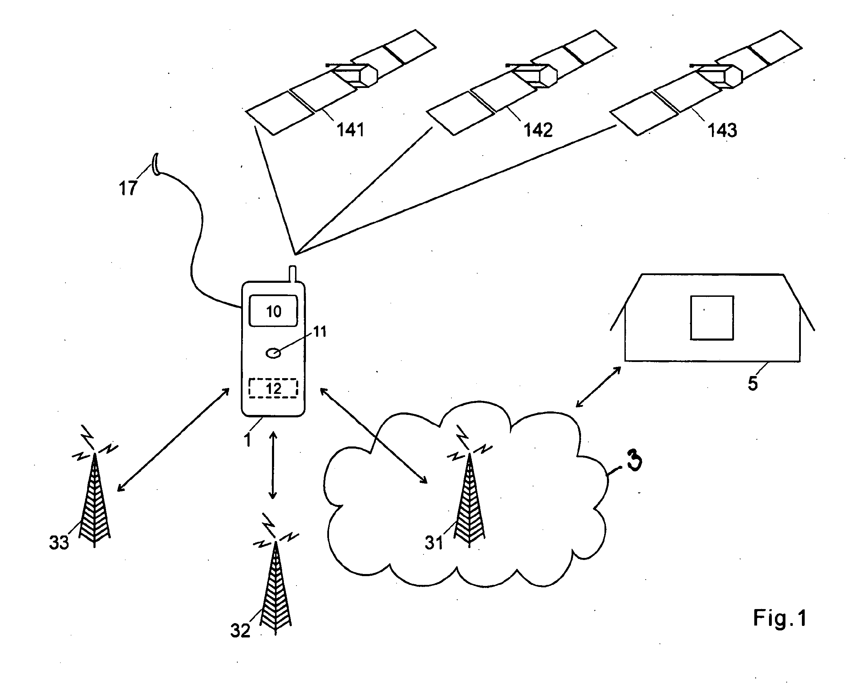

Die Figur 1 zeigt ein Blockschema eines erfindungsgemässen Systems. Das System umfasst eine Zentrale 5 (zum Beispiel eine Behindertenhilfezentrale) mit einem Call-Center, um Anrufe und Notrufmeldungen von Behinderten zu bearbeiten und zu beantworten. Eine Vielzahl von Behinderten (nicht dargestellt) sowie andere Personen sind mit Mobilgeräten 1 ausgerüstet; eine Datenkommunikation und vorzugsweise auch eine Sprachkommunikation kann über ein Funknetz 3 zwischen den Mobilgeräten 1 und der Zentrale 5 aufgebaut werden. Das Funknetz 3 besteht vorzugsweise aus einem Mobilfunknetz (zum Beispiel ein GSM- oder UMTS-Mobilfunknetz), könnte in einer anderen Ausführungsform auch aus einem kontaktlosen lokalen Netzwerk (WLAN, Wireless Local Area Network) bestehen. Das Netz 3 kann dank Roamingsabkommen mit anderen Fremdnetzwerken verbunden werden, damit die Behinderten auch dann mit der Zentrale 5 verbunden werden können, wenn sie sich in einem von einem anderen Netz versorgten Gebiet bewegen. Das Funknetz 3 umfasst eine von einem Betreiber betriebene Infrastruktur mit unter anderem Basisstationen BS 31, 32, 33.

Die Mobilgeräte 1 umfassen eine optionale Anzeige 10, eine oder mehrere Tasten 11 mit welchen Notrufmeldungen erzeugt werden können, und Bearbeitungsmittel. Über einen Kopfhörer 17 können empfangene Tonsignale wiedergegeben werden. Ein später beschriebenes Standortbestimmungsmodul 14 ist vorgesehen, um den Standort des Mobilgerätes 1 zu bestimmen. Das Standortbestimmungsmodul 14 kann beispielsweise ein Satellitenstandortbestimmungsmodul umfassen, das die Empfangszeit von Signalen aus mehreren Satelliten 141, 142, 143, zum Beispiel GPS-Satelliten (Global Positionning System) ermittelt, um damit einen Standort zu bestimmen. In einer anderen Variante (oder zusätzlich dazu) verwendet das Standortbestimmungsmodul 14 die Infrastruktur des Mobilfunknetzes 3, um einen Standort zu bestimmen. Die Standortbestimmung kann in diesem Fall entweder im Mobilgerät 1 selbst erfolgen -wobei das Mobilgerät 1 in diesem Fall die Empfangszeit und/oder die Stärke der Signale von verschiedenen benachbarten Basisstationen 31, 32, 33 ermittelt, oder in einem einfachen Fall nur die Identifikation der Zelle im Mobilfunknetz 3 verwendet - oder durch einen Server in der Infrastruktur, der den Mobilteilnehmerstandort aus der Empfangszeit und/oder der Stärke der von verschiedenen Basisstationen empfangenen Mobilgerätsignale ermittelt.

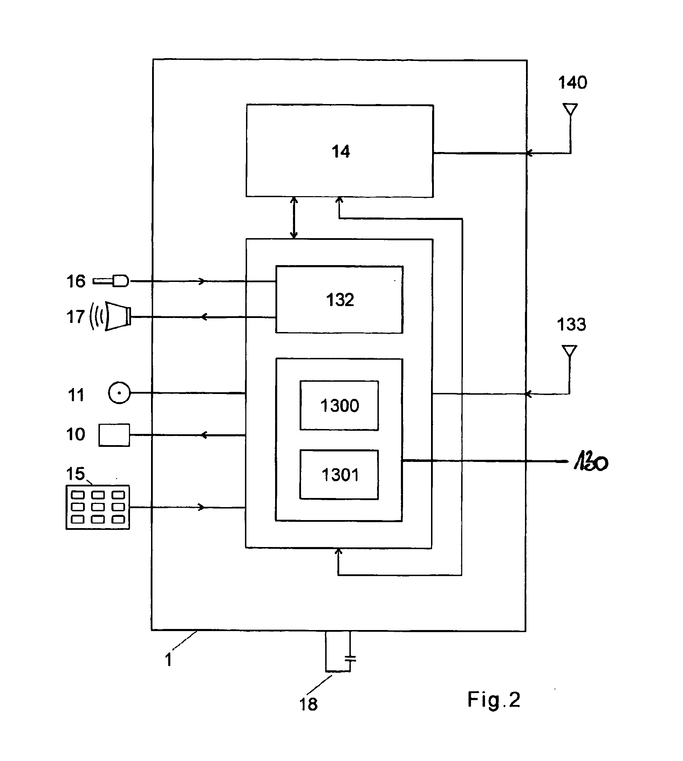

Die Figur 2 zeigt ein Blockschema eines erfindungsgemässen Mobilgeräts 1, das von einer wieder aufladbaren Batterie 18 gespeist wird. Es besteht vorzugsweise aus einem kleinen Gehäuse, das zum Beispiel am Behindertenrollstuhl befestigt wird; das Standortbestimmungsmodul 14 kann in diesem Gehäuse integriert werden, oder mit der Elektronik in diesem Gehäuse elektrisch oder per Funk verbunden sein. Falls das Standortbestimmungsmodul 14 aus einem Satellitenstandortbestimmungsmodul besteht, umfasst es vorzugsweise eine spezifische Antenne 140. Falls das Standortbestimmungsmodul 14 die Infrastruktur des Mobilfunknetzes 3 verwendet, kann das Standortbestimmungsmodul 14 einfach aus einer Software im Mobilgerät 1 und/oder in einer Identifizierungskarte 12 bestehen, welche den Standort des Mobilteilnehmers aus der Mobilfunknetz-Zelle und/oder aus einer durch die Infrastruktur des Netzes 3 übermittelte Messung erhält.

Die Bearbeitungsmittel im Mobilgerät 1 umfassen vorzugsweise einen mit einer Mobilfunknetzantenne 133 versehenen GSM- oder UMTS-Teil 132, weicher unter anderem Sprachverbindungen durch das Mobilfunknetz 3 aufbauen und empfangen kann. Die Sprachkommunikation erfolgt mit dem bereits erwähnten Kopfhörer 17 und mit einem Mikrophon 16; diese Teile sind jedoch nicht wesentlich für die Erfindung. Eine optionale Tastatur 15 kann auch vorgesehen werden, falls das Mobilgerät 1 auch für den Aufbau von "normalen" Verbindungen verwendet werden muss. Es wird aber eine Notruftaste 11 vorgesehen, die vom Behinderten betätigt wird, wenn eine Notrufmeldung ausgelöst werden soll. Notrufmeldungen können aber auch von anderen Ereignissen getriggert werden und verschiedene nicht dargestellte medizinische oder auf die Umwelt reagierende Sensoren können mit dem Mobilgerät 1 verbunden werden, um automatisch Notrufmeldungen auszulösen.

Das Mobilgerät 1 umfasst ausserdem eine Identifizierungskarte 130, vorzugsweise eine herausnehmbare Chipkarte (beispielsweise eine für die Erfindung programmierte konventionelle SIM-Karte), mit welcher unter anderem das Mobilgerät 1 zuverlässig von der Infrastruktur des Mobilfunknetzes 3 und vom Betreiber der Zentrale 5 authentifiziert wird. Die Identifizierungskarte130 umfasst einen Mobilfunknetzteil 1300, um über das Mobilfunknetz 3 empfangene Datenmeldungen zu bearbeiten. Das Mobilfunknetzteil 1300 kann vorzugsweise SMS Klasse 2 empfangen und ist derart programmiert, dass solche SMS empfangen werden, ohne angezeigt zu werden und ohne ein Tonsignal zu erzeugen. Vorzugsweise kann der Mobilfunknetzteil 1300 auch (oder zusätzlich) USSD-Datenmeldungen ohne Warnton und ohne Anzeige empfangen und bearbeiten.

Die Identifizierungskarte 130 umfasst einen konventionellen Mikrokontroller mit einem Speicherbereich, in welchem als Modul 1301 ein Programm zur Ausführung des erfindungsgemässen Verfahrens abgelegt ist. Dieser Speicherbereich kann vom Mobilfunknetzbetreiber während der Personalisierung der Identifizierungskarte und/oder vom Betreiber der Zentrale über die Luftschnittstelle (OTA, over-the-air) programmiert werden. Programme zur Ausführung des erfindungsgemässen Verfahrens können auch (oder zusätzlich) im Mobilgerät 1, ausserhalb der Identifizierungskarte 130, gespeichert und ausgeführt werden. Eine Ausführung der dienstspezifischen Programme durch den Mikrokontroller der Identifizierungskarte 130 hat jedoch den Vorteil, dass für alle Abonnenten eines Mobilfunknetzes 3 ein einziges Programm vorbereitet werden muss, unabhängig vom eingesetzten Mobilfunkteil. Das erfindungsgemässe Programm-Modul 1301 kann empfangene Datenmeldungen prüfen und eine Antwortmeldung mit dem Standort der Identifizierungskarte 130 an die Zentrale 5 durch das Mobilgerät 1 senden lassen.

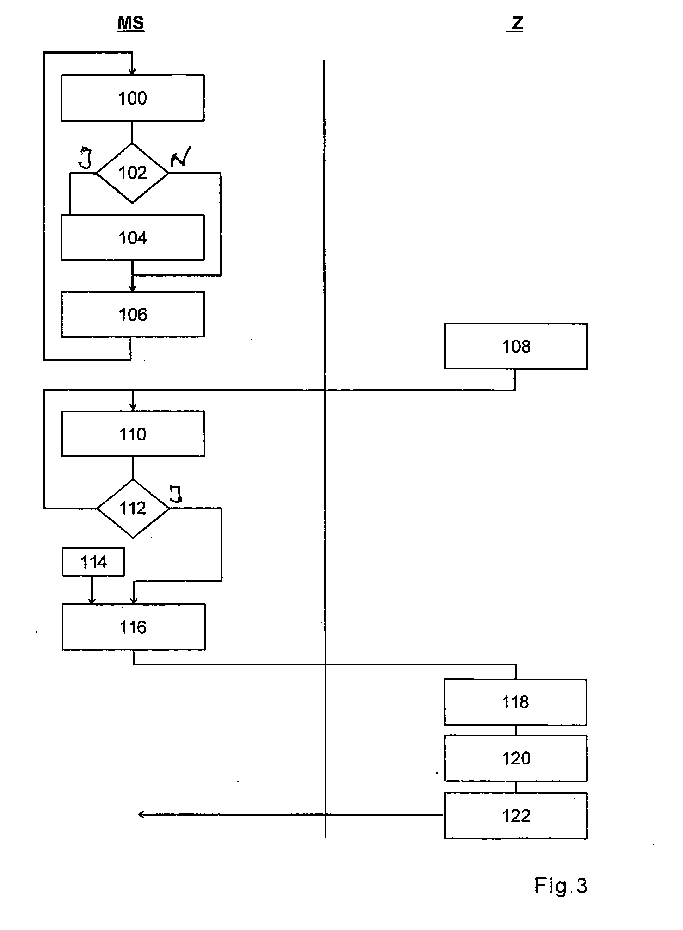

Wir werden jetzt das erfindungsgemässe Verfahren anhand der Figur 3 näher beschreiben. Die linke Spalte in dieser Figur zeigt die Verfahrensschritte, die vom Mobilgerät 1 (einschliesslich Identifizierungskarte 130) durchgeführt werden, während die rechte Spalte der Zentrale 5 entspricht.

Im Schritt 100 ermittelt das Mobilgerät 1 seinen Standort anhand des Satellitenstandortbestimmungsmoduls 14 (wenn vorhanden). Das Mobilgerät prüft dann während dem Schritt 102, ob die Messung in Ordnung ist. Ist dies der Fall, wird der ermittelte Standort während einem Schritt 104 zum Beispiel als Koordinate in einem nicht dargestellten FIFO (First In First Out) Buffer im Mobilgerät 1 (vorzugsweise in der Identifizierungskarte 130) gespeichert. Wenn die Satellitenstandortmessung unzuverlässig ist (zum Beispiel weil momentan keine GPS-Abdeckung vorhanden ist), ermittelt das Mobilgerät 1 während einem weiteren Schritt seinen Standort anhand der Infrastruktur des Mobilfunknetzes 3. Die ermittelte Koordinate wird dann im Schritt 106 auch im Speicherbereich gespeichert. Erfindungsgemäss wird im Speicherbereich auch ein Flag abgelegt, das für jede Messung angibt, ob sie mit dem Satellitenstandortbestimmungsmittel oder mit der Infrastruktur des Mobilfunknetzes 3 ermittelt wurde. Standortmessungen werden dann automatisch periodisch wiederholt (zum Beispiel jede Minute). Mehrere nacheinander folgende Messungen werden im Buffer abgelegt. Während einem nicht dargestellten Verfahrensschritt kann optional die Bewegungsrichtung des Mobilgeräts 1 aus der Serie von Werten im Buffer berechnet werden.

Der Behinderte kann dann zu jeder Zeit während einem nicht dargestellten Verfahrensschritt seinen aktuellen Standort an die Zentrale senden, indem er die Notruftaste 11 seines Mobilgeräts 1 betätigt, oder wenn ein anderes Ereignis die automatische Sendung einer Notrufmeldung an die Zentrale 5 auslöst. Die über das Mobilfunknetz 3 gesendete Notrufmeldung besteht beispielsweise aus einer SMS-Meldung, aus einer USSD, oder aus irgendeiner anderen passenden im Mobilfunknetzsystem standardisierten Meldung. Es werden vorzugsweise in der Notrufmeldung mehrere nacheinander folgende Koordinaten aufgeführt, damit die Zentrale 5 auch die Bewegungsrichtung des Behinderten ermitteln und somit dessen jetzigen Standort extrapolieren kann. Die Notrufmeldung meldet für jede enthaltene Messung, ob sie durch das Satellitenstandortbestimmungssystem und/oder mit der Infrastruktur des Mobilfunknetzes 3 ermittelt wurde. Auf diese Weise kann die Zentrale 5 die Messgenauigkeit einschätzen und somit genauer interpolieren, wie später beschrieben. Braucht der Behinderte Hilfe, kann er auch schneller beraten oder gefunden werden, wenn die Zentrale 5 den Radius des Gebiets, in welchem er sich befindet, abschätzen kann. Die Zentrale 5 kann dann (falls nötig) eine Sprachverbindung mit dem Behinderten aufbauen.

Behinderte, die über das erfindungsgemässe Mobilgerät 1 verfügen, können auch von der Zentrale 5 lokalisiert werden, wenn sie keine Notrufmeldung gesendet haben. Dies kann beispielsweise dann nützlich sein, wenn die Person gesucht wird, was insbesondere bei Alzheimer- oder älteren Patienten passieren kann, oder wenn sie bewusstlos sein sollten. Dieser Vorgang wird mit dem unteren Teil der Figur 3 näher beschrieben. In diesem Fall wird der Vorgang während dem Schritt 108 von der Zentrale 5 initiiert, die eine Lokalisationsmeldung an das Mobilgerät 1 über das Mobilfunknetz 3 sendet. Die gesendete Meldung enthält vorzugsweise ein von Dritten unprüfbares Geheimnis, das nur vom Ziel-Mobilgerät 1 geprüft werden kann, zum Beispiel einen PIN-Code (Personal Identification Number) oder eine mit einem elektronischen Schlüssel signierte Datei.

Die Lokalisationsmeldung wird vorzugsweise als SMS Klasse 2 oder als USSD durch das Mobilfunknetz 3 übertragen. SMS Klasse 2 und USSD haben den Vorteil, dass sie vom Mobilgerät 1 direkt an die Identifizierungskarte 130 weitergeleitet werden können, ohne ein Tonsignal zu erzeugen und ohne etwas auf der Anzeige 10 wiederzugeben. Damit können Lokalisationsmeldungen von der gesuchten Person unbemerkt während dem Schritt 110 empfangen werden, so dass sich die Person nicht gestört fühlt. Andere Datagramm-Formate, die unauffällig empfangen werden und die vorzugsweise im Mobilfunkssystem standardisierte Mechanismen verwenden, können aber auch im Rahmen der Erfindung verwendet werden, wobei vorzugsweise keine teure Verbindung durch den Sprachkanal aufgebaut wird.

Im Schritt 112 prüft das Modul 1301 - oder ein anderes Programm im Mobilgerät 1 - ob die empfangene Lokalisationsmeldung das richtige erwartete Format hat und ob das Geheimnis korrekt ist. Nur wenn dies auch der Fall ist, werden während dem Schritt 116 der letzte oder die letzten ermittelten Standorte und/oder die Bewegungsrichtung an die Zentrale 5 gesendet. Wie bereits erwähnt, kann diese Sendung auch durch einen anderen Trigger 114 (zum Beispiel durch das Betätigen der Notruftaste) ausgelöst werden. Auch in diesem Fall kann die Zentrale 5 den Standort des Behinderten extrapolieren (Schritt 118), seine Bewegungsrichtung ermitteln (Schritt 120) und gegebenenfalls eine Sprachverbindung aufbauen (122).

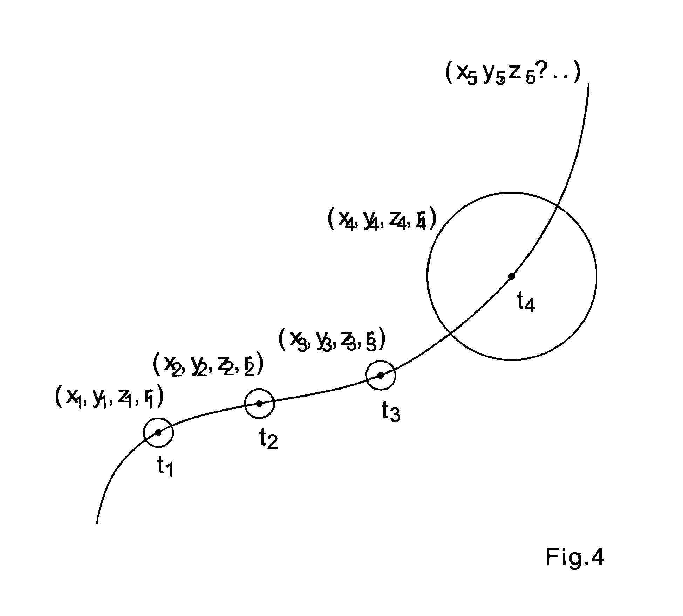

Die Figur 4 zeigt die Trajektorie t einer Person. Entlang dieser Trajektorie wird der Standort (xi, yi, zi) der Person vier Mal zu den Zeiten t1, t2, t3 und t4 ermittelt, wobei die drei ersten Messungen in diesem Beispiel mit einer Genauigkeit ri durch ein GPS-System erfolgen, während die vierte Messung mit einer schlechteren Genauigkeit r4 durch die Infrastruktur des Mobilfunknetzes 3 erfolgt. Der Radius der vier Kreise entspricht der Messgenauigkeit. Es ergibt sich, dass sich die aktuelle Position x5, y5, z5 der Person schlecht anhand der ungenauen letzten Messung extrapolieren lässt; eine eventuell bessere Extrapolation erfolgt, wenn nur die drei ersten Messungen verwendet werden. Damit die Zentrale 5 diese Messgenauigkeit für den Extrapolationsvorgang berücksichtigen kann, sendet das Modul 1301 für jede Messung ein Flag oder eine Angabe, um anzugeben, mit welchem Standortbestimmungssystem die Messung erfolgte. Ausserdem kann auch die Position der letzten Messung zur Zeit t4 besser durch Extrapolation der Messungen an den Zeiten t1, t2, t3 ermittelt werden.

### Bezugszeichenliste

- 1: Mobilgerät
- 10: Anzeige
- 11: Notruftaste
- 12: Identifizierungskarte
- 130: Identifizierungskarte
- 1300: Mobilfunknetzteil
- 1301: Modul
- 132: GSM- oder UMTS-Teil
- 133: Mobilfunknetzantenne
- 14: Standortbestimmungsmodul
- 140: Antenne
- 141: Satellit
- 142: Satellit
- 143: Satellit
- 15: Tastatur
- 16: Mikrophon
- 17: Kopfhörer
- 18: Batterie
- 3: Mobilfunknetz
- 31: Basisstation
- 32: Basisstation
- 33: Basisstation
- 5: Zentrale

## Patentansprüche

1. Verfahren, um den Standort von mit einem Mobilgerät (1) ausgerüsteten Personen durch eine Zentrale (5) zu bestimmen, mit folgenden Schritten:
die Zentrale (5) sendet eine Lokalisationsmeldung über ein Mobilfunknetz (3) an das Mobilgerät (1) der Person (108),
das benannte Mobilgerät (1) empfängt die benannte Lokalisationsmeldung, ohne sie anzuzeigen und ohne ein Tonsignal zu erzeugen (110),
das benannte Mobilgerät (1) prüft den Inhalt der benannten Lokalisationsmeldung (110-112), wobei die benannte Lokalisationsmeldung ein von Dritten unprüfbaren PIN-Code oder eine mit einem elektronischen Schlüssel signierte Datei enthält,
falls die benannte Prüfung ein positives Resultat ergibt, beantwortet das benannte Mobilgerät (1) die benannte Lokalisationsmeldung mit einer Antwortmeldung, in welcher die letzten ermittelten Standorte enthalten sind (116), wobei im benannten Mobilgerät (1) der Standort periodisch ermittelt wird (100-102-104).

2. Verfahren gemäss Anspruch 1, in welchem der benannte Standort im Voraus ermittelt wird (100-102-104).

3. Verfahren gemäss einem der Ansprüche 1 bis 2 mit folgenden Schritten:
Speicherung von mehreren nacheinander folgenden Standorten im benannten Mobilgerät (1) (106),
Sendung einer Meldung mit mehreren nacheinander folgenden Standorten und/oder mit einer aus mehreren nacheinander folgenden ermittelten Richtungsangaben, an die benannte Zentrale (116).

4. Verfahren gemäss einem der Ansprüche 1 bis 3, in welchem die benannten Standorte mit einem Satellitenstandortbestimmungssystem (14, 141) ermittelt werden.

5. Verfahren gemäss einem der Ansprüche 1 bis 3, in welchem die benannten Standorte durch die Infrastruktur des Mobilfunknetzes (3) ermittelt und an das benannte Mobilgerät (1) übermittelt werden.

6. Verfahren gemäss einem der Ansprüche 1 bis 5, in welchem die benannten Standorte je nach Standort und/oder Abdeckung entweder durch ein Satellitenstandortbestimmungssystem (14) oder durch die Infrastruktur des Mobilfunknetzes (3) ermittelt und an das benannte Mobilgerät (1) übermittelt werden.

7. Verfahren gemäss Anspruch 6, in welchem die benannte Antwortmeldung angibt, ob die benannten Standorte durch ein Satellitenstandortbestimmungssystem (14) oder durch die Infrastruktur des Mobilfunknetzes (3) ermittelt wurden.

8. Verfahren gemäss einem der Ansprüche 1 bis 7, in welchem eine Sprachverbindung zwischen der benannten Zentrale (5) und dem benannten Mobilgerät (1) erzeugt wird.

9. Verfahren gemäss einem der Ansprüche 1 bis 3, in welchem die Bewegungsrichtung der benannten Person vom benannten Mobilgerät (1) in Abhängigkeit von den benannten nacheinander folgenden Standorten ermittelt und in der benannten Antwortmeldung enthalten ist.

10. Verfahren gemäss einem der Ansprüche 1 bis 9, in welchem der aktuelle Standort der benannten Person vom benannten Mobilgerät (1) in Abhängigkeit von den benannten nacheinander folgenden Standorten extrapoliert und in der benannten Antwortmeldung enthalten ist.

11. Verfahren gemäss einem der Ansprüche 1 bis 10, in welchem die benannte Lokalisationsmeldung über SMS Klasse 2 gesendet wird und in welchem die benannte Lokalisationsmeldung von einer Anwendung in der SIM-Karte im benannten Mobilgerät (1) empfangen und geprüft wird.

12. Verfahren gemäss einem der Ansprüche 1 bis 10, in welchem die benannte Lokalisationsmeldung über USSD gesendet wird.

## Claims

1. Method to determine the location of a person equipped with a mobile device (1) by a central office (5) with the following steps:
the central office (5) sends a localisation message over a mobile radio network (3) to the mobile device (1) of the person (108),
said mobile device (1) receives said localisation message without displaying and without creating a voice signal (110),
said mobile device (1) checks the content of said localisation message (110-112), wherein said localisation message contains a PIN code not checkable by a third party or a data file with an electronic signed key,
if said checking results positively, said mobile device (1) answers said localisation message with an answer message, in which the last determined locations are included (116), whereby in said mobile device (1) the location is periodically determined (100-102-104).

2. Method according to claim 1, wherein said location is determined in advance (100-102, 104).

3. Method according to any of the claims 1 to 2 with the following steps:
Storage of a plurality of subsequent following locations in said mobile device (1) (106),
Sending a message with a plurality of subsequent following locations and/or with a moving indication determined from a plurality of subsequent following locations to said central office (5).

4. Method according to any of the claims 1 to 3, wherein said locations are determined by a satellite location determination system (14, 141).

5. Method according to any of the claims 1 to 3, wherein said locations are determined by the infrastructure of said mobile radio network (3) and are transmitted to said mobile device (1).

6. Method according to any of the claims 1 to 5, wherein said locations according to the location and/or the covering are transmitted by either a satellite location determination system (14) or through the infrastructure of said mobile radio network (3) to said mobile device (1).

7. Method according to claim 6, wherein said answer message indicates, if said locations are determined by a satellite location determination system (14) or through the infrastructure of said mobile radio network (3).

8. Method according to any of the claims 1 to 7, wherein a speech connection between the central office (5) and said mobile device (1) is created.

9. Method according to any of the claims 1 to 3, wherein the moving direction of said person of said mobile device (1) is determined in dependency of said subsequent following locations and is included in said answer message.

10. Method according to any of the claims 1 to 9, wherein the actual location of said person of said mobile device (1) is extrapolated in dependency of said subsequent following locations and is included in said answer message.

11. Method according to any of the claims 1 to 10, wherein said localisation message is sent over SMS class 2 and wherein said localisation message is received and checked by an application in a SIM cart in said mobile device (1).

12. Method according to any of the claims 1 to 10, wherein said localisation message is sent over USSD.

## Revendications

1. Procédé pour déterminer la position d'une personne équipée d'un téléphone mobile (1) au moyen d'une centrale (5) suivant les étapes ci-dessous:
la centrale (5) envoie un message de localisation au moyen d'un réseau de radiocommunication mobile (3) au téléphone mobile (1) de la personne (108),
ledit téléphone mobile (1) reçoit ledit message de localisation sans l'afficher ni émettre de signal sonore (110),
ledit téléphone mobile (1) vérifie le contenu dudit message de localisation (110-112), selon lequel ledit message de localisation contient un code PIN non vérifiable par une tierce personne ou un fichier comportant une signature électronique,
lorsque ladite vérification est positive, ledit téléphone mobile (1) envoie une réponse audit message de localisation, dans laquelle les dernières positions déterminées sont incluses (116), selon lesquelles la position est déterminée de manière périodique (100-102-104) dans ledit téléphone mobile (1).

2. Procédé selon la revendication 1, selon lequel la position est déterminée en avance (100-102, 104).

3. Procédé selon l'une des revendications 1 à 2 comprenant les étapes suivantes:
enregistrement de plusieurs positions consécutives dans ledit téléphone mobile (1) (106),
envoi d'un message avec plusieurs positions consécutives et/ou avec une indication de direction générée par plusieurs positions consécutives à ladite centrale (5).

4. Procédé selon l'une des revendications 1 à 3, selon lequel lesdites positions sont déterminées par un système de géo localisation par satellite (14, 141).

5. Procédé selon l'une des revendications 1 à 3, selon lequel lesdites positions sont déterminées par l'infrastructure dudit réseau de radiocommunication mobile (3) et sont transmises audit téléphone mobile (1).

6. Procédé selon l'une des revendications 1 à 5, selon lequel lesdites positions sont déterminées selon la position et/ou selon la couverture et transmises soit par un système de géo localisation par satellite (14) soit par l'infrastructure dudit réseau de radiocommunication mobile (3) audit téléphone mobile (1).

7. Procédé selon la revendication 6, selon lequel ladite réponse indique, si lesdites positions sont déterminées par un système de géo localisation par satellite (14) ou par l'infrastructure dudit réseau de radiocommunication mobile (3).

8. Procédé selon l'une des revendications 1 à 7, selon lequel une connexion vocale est créée entre la centrale (5) et ledit téléphone mobile (1).

9. Procédé selon l'une des revendications 1 à 3, selon lequel l'indication de direction de ladite personne dudit téléphone mobile (1) est déterminée d'après lesdites positions consécutives et est incluse dans ladite réponse.

10. Procédé selon l'une des revendications 1 à 9, selon lequel la position actuelle de ladite personne dudit téléphone mobile (1) est extrapolée d'après lesdites positions consécutives et est incluse dans ladite réponse.

11. Procédé selon l'une des revendications 1 à 10, selon lequel ledit message de localisation est envoyé par SMS de classe 2 et selon lequel ledit message de localisation est reçu et vérifié par une application dans la carte SIM dudit téléphone mobile (1).

12. Procédé selon l'une des revendications 1 à 10, selon lequel ledit message de localisation est envoyé par USSD.
